# EUROPÄISCHE PATENTSCHRIFT

(11) **EP 1 290 744 B1**
(45) Veröffentlichungstag und Bekanntmachung des Hinweises auf die Patenterteilung: **17.03.2004**
(21) Anmeldenummer: 01955197.7
(22) Anmeldetag: 05.06.2001
(51) Int. Cl.: H01M 8/06, B60L 11/18

(54) **BRENNSTOFFZELLENSYSTEM UND VERFAHREN ZUM EIN-/ABSCHALTEN EINES BRENNSTOFFZELLENSYSTEMS**
FUEL-CELL SYSTEM AND A METHOD FOR SWITCHING ON/SWITCHING OFF A FUEL-CELL SYSTEM
SYSTEME DE PILE A COMBUSTIBLE ET PROCEDE POUR LA MISE EN MARCHE ET L'ARRET D'UN SYSTEME DE PILE A COMBUSTIBLE

(30) Priorität: 05.06.2000 DE 10028329
(43) Veröffentlichungstag der Anmeldung: 12.03.2003
(73) Patentinhaber: P 21-Power for the 21st Century GMBH, 85649 Brunntal (DE)
(72) Erfinder: HERDEG, Wolfgang, 72141 Walddorfhäslach (DE); KLOS, Holger, 81541 München (DE); SATTLER, Martin, 97486 Königsberg (DE); ZAPP, Thomas, 44265 Dortmund (DE); KEUTZ, Markus, 64380 Rossdorf (DE); WILHELM, Hans-Dieter, 61267 Neu-Anspach (DE); HABRICH, Jürgen, 63512 Hainburg (DE); ECK, Karl, 60318 Frankfurt (DE)
(74) Vertreter: Müller, Thomas, Dipl.-Ing.
(86) Internationale Anmeldenummer: PCT/DE2001/002110
(87) Internationale Veröffentlichungsnummer: WO 2001/095419

(56) Entgegenhaltungen:
- WO-A-99/46140
- US-A- 4 657 829

## Beschreibung

Die vorliegende Erfindung betrifft ein Brennstoffzellensystem, mit einer Brennstoffzelle und einer Anzahl von Nebenaggregaten zum Starten und Betreiben der Brennstoffzelle. Weiterhin betrifft die Erfindung ein Verfahren zum Ein-/Abschalten eines Brennstoffzellensystems.

Brennstoffzellen sind bereits seit langem bekannt und haben insbesondere im Bereich der Automobilindustrie in den letzten Jahren erheblich an Bedeutung gewonnen.

Ähnlich wie Batteriesysteme erzeugen Brennstoffzellen elektrische Energie auf chemischem Wege, wobei die einzelnen Reaktanten kontinuierlich zugeführt und das Reaktionsprodukt kontinuierlich abgeführt werden. Dabei liegt den Brennstoffzellen das Funktionsprinzip zu Grunde, daß sich elektrisch neutrale Moleküle oder Atome miteinander verbinden und dabei Elektronen austauschen. Dieser Vorgang wird als Redoxprozeß bezeichnet. Bei der Brennstoffzelle werden die Oxidations- und Reduktionsprozesse räumlich voneinander getrennt. Die bei der Reduktion abgegebenen Elektronen lassen sich als Strom durch einen Verbraucher leiten, beispielsweise den Elektromotor eines Fahrzeugs.

Als gasförmige Reaktionspartner für die Brennstoffzelle werden beispielsweise Wasserstoff als Brennstoff und Sauerstoff als Oxidationsmittel verwendet. Der Sauerstoff ist normalerweise immer verfügbar, da er über die angesaugte Umgebungsluft bereitgestellt werden kann, während der Wasserstoff in der Regel zunächst gesondert hergestellt werden muß. Letzteres wird beispielsweise erreicht, indem Kohlenwasserstoffe wie etwa Erdgas oder Methanol durch Reformierung oder dergleichen, beispielsweise durch das Verfahren der sogenannten partiellen Oxidation (POX), in ein wasserstoffreiches Gas umgewandelt werden.

Diese Reaktionen, ebenso wie nachgeschaltete Gasreinigungsschritte, laufen üblicherweise katalytisch jeweils auf einem bestimmten Temperatumiveau ab. Wird dieses Niveau nicht erreicht, laufen verstärkt unerwünschte Nebenreaktionen ab, die die Qualität des erzeugten Wasserstoffs stark beeinflussen. In extremen Fällen können diese unerwünschten Nebenreaktionen zum Erliegen der Reaktionen in der Brennstoffzelle und sogar zu deren Beschädigung führen (Vergiftung durch schädliche Gaskomponenten).

Es ist daher wünschenswert, insbesondere bei Betriebsbeginn einer Brennstoffzelle, diese und andere - insbesondere katalytische - Reaktorelemente (im folgenden als Nebenaggregate bezeichnet) möglichst schnell auf Betriebstemperatur zu bringen, um ein Auftreten unerwünschter Nebenreaktionen zu verhindern.

Ausgehend hiervon liegt der vorliegenden Erfindung die Aufgabe zu Grunde, ein Brennstoffzellensystem sowie ein Verfahren zum Ein-/Abschalten eines Brennstoffzettensystems bereitzustellen, bei/mit dem die genannten Nachteile vermieden werden. Insbesondere sollen ein Brennstoffzellensystem und ein Verfahren bereitgestellt werden, mit dem die Dynamik des Betriebszyklusses verbessert werden kann.

Die Aufgabe wird durch eine Weiterbildung des eingangs beschriebenen Brennstoffzellensystems gelöst; das erfindungsgemäß dadurch gekennzeichnet ist, daß eine Einrichtung zum Ein-/Abschalten der Brennstoffzelle und der Nebenaggregate vorgesehen ist, über die zumindest einzelne Nebenaggregate und/oder die Brennstoffzelle unabhängig voneinander ein-/abschaltbar sind.

Durch ein derartig ausgestaltetes Brennstoffzellensystem kann die Dynamik im Betriebszyklus stark verbessert werden. Der Grundgedanke der vorliegenden Erfindung ist darin zu sehen, daß über die Einrichtung zum Ein-/Abschalten nicht jeweils in einem Schritt das gesamte Brennstoffzellensystem ein- beziehungsweise abgeschaltet wird, sondern daß gezielt einzelne Komponenten des Brennstoffzellensystems (Nebenaggregate) unabhängig voneinander einbeziehungsweise abgeschaltet werden können.

Die Vorteile des erfindungsgemäßen Brennstoffzetlensystems werden nachfolgend exemplarisch an Hand eines Brennstoffzellensystems für ein Fahrzeug beschrieben. Es ist jedoch selbstverständlich, daß die Erfindung nicht auf Brennstoffzellensysteme für Fahrzeuge beschränkt ist, sondern für jede Art von Brennstoffzellensystemen und für jede beliebige Anwendung verwendet werden kann.

Besonders im mobilen Einsatz von Brennstoffzellensystemen ist es sehr wichtig, eine gute Dynamik im Fahrzyklus zu realisieren. Ein besonders kritischer Punkt ist dabei das Starten eines kalten Fahrzeugs. In diesem Fall müssen insbesondere die als katalytische Reaktorelemente ausgebildeten Nebenaggregate und die Brennstoffzelle selbst sehr schnell auf die entsprechende Betriebstemperatur gebracht werden, um das Auftreten unerwünschter Nebenreaktionen, die zu einer Beschädigung der Brennstoffzelle führen können, zu verhindern. Erst wenn die entsprechende Betriebstemperatur der einzelnen Nebenaggregate erreicht ist, kann der benötigte Brennstoff, insbesondere Wasserstoff, in der erforderlichen Reinheit produziert werden, so daß der Betreiber sein Fahrzeug bewegen kann.

Da das Aufheizen von erkatteten Nebenaggregaten relativ viel Zeit benötigt, andererseits das Starten des Fahrzeugs ohne große Zeitverzögerung möglich sein soll, wird durch das erfindungsgemäße Brennstoffzellensystem erreicht, daß einzelne Nebenaggregate und/oder die Brennstoffzelle des Brennstoffzettensystems früher eingeschaltet beziehungsweise später abgeschaltet werden als andere Nebenaggregate. So können beim Abschalten des Fahrzeugs beispielsweise zunächst nur die weniger wichtigen Verbraucher und Prozesse abgeschaltet werden. Diejenigen Nebenaggregate, die für einen schnellen Neustart benötigt werden, bleiben zumindest noch für einige Zeit in Betrieb. Das bedeutet, daß die Gaserzeugung auch im abgeschalteten Zustand der Brennstoffzelle zunächst noch so viel Wasserstoff erzeugt, um die entsprechenden Nebenaggregate auf Temperatur zu halten. Die Leistung der Nebenaggregate ist dabei normalerweise gegenüber dem Betrieb bei eingeschaltetem Brennstoffzellensystem deutlich reduziert, so daß man von einem Bereitschaftsbetrieb sprechen kann. Bei einem Neustart des Fahrzeugs während der Zeit des Bereitschaftsbetriebs entfällt dann die benötigte Zeitspanne, die bisher erforderlich war, um die Nebenaggregate auf die erforderliche Betriebstemperatur zu bringen.

Je nach Anwendungsgebiet des Brennstoffzellensystems können unterschiedliche Nebenaggregate zum Starten und zum Betrieb des Brennstoffzellensystems von grundlegender Bedeutung sein. Durch die Einrichtung zum Ein-/Abschalten wird es möglich, diese Nebenaggregate gezielt anzusteuern und besonders spät abzuschalten beziehungsweise besonders früh einzuschalten.

Vorteilhafte Ausgestaltungen des Brennstoffzellensystems ergeben sich aus den Unteransprüchen.

Vorteilhaft kann die Einrichtung zum Ein-/Abschalten derart ausgebildet sein, daß die Brennstoffzelle und/oder die Nebenaggregate gestuft ein-/abschaltbar sind oder ein-/abgeschaltet werden. Damit ist gemeint, daß in diesem Fall die Brennstoffzelle und/oder jeweils einzelne Nebenaggregate in Gruppen zusammengefaßt und in diesen Gruppen jeweils nacheinander ein- beziehungsweise abgeschaltet werden können.

In weiterer Ausgestaltung kann die Einrichtung zum Ein-/ Abschalten eine automatische Schalteinrichtung aufweisen.Diese Schalteinrichtung kann beispielsweise nach einem fest vorgegebenen Plan zeitgesteuert arbeiten oder aber durch den Betreiber fallweise individuell eingestellt werden. Bei Verwendung des Brennstoffzellensystems in einem Fahrzeug werden bei der festen Zeitsteuerung beispielsweise nach dem Abstellen des Fahrzeugs alle unnötigen Prozesse der Nebenaggregate sofort abgestellt, wohingegen die restlichen Prozesse der Nebenaggregate, die beispielsweise für einen schnellen Neustart des Fahrzeugs notwendig sind, erst nach einer bestimmten vorgegebenen Zeitspanne, beispielsweise einer Stunde oder dergleichen, abgestellt werden. Eine derartige Zeitschaltung für das Brennstoffzellensystems ist insbesondere dann sinnvoll, wenn das Fahrzeug vorwiegend in zeitlichen Intervallen von ähnlicher Dauer bewegt wird. Solche Fahrzeuge sind beispielsweiseTaxis, Flottenfahrzeuge (zum Beispiel Postfahrzeuge), Busse sowie Fahrzeuge, die nur im Stadtverkehr verwendet werden.

Je nach Ausgestaltungsform des Brennstoffzellensystems kann die Zeitspanne, nach der die Nebenaggregate abgeschaltet werden, in der Schalteinrichtung fest vorgegeben sein. Es ist natürlich auch vorteilhaft, wenn die Schalteinrichtung derart programmierbar oder einstellbar ist, daß der Betreiber die Zeitspanne sowie die einzelnen Nebenaggregate, die nach der jeweiligen Zeitspanne abgeschaltet werden sollen, situationsabhängig frei auswählen und einstellen kann.

In weiterer Ausgestaltung kann die automatische Schalteinrichtung derart ausgebildet sein, daß über eine geeignete Betätigungsvorrichtung, beispielsweise einen Knopf, Schalter, Taster oder dergleichen, jeweils nur ein bestimmter vorgegebener Betriebszustand eingestellt wird. So ist es beispielsweise vorteilhaft, wenn der Betreiber über eine sotche Betätigungsvorrichtung zwischen den Zuständen Ein, Stand-By und Aus wählen kann. Im Stand-By-Modus können dann solche Nebenaggregate des Brennstoffzellensystems abgeschaltet sein, die zu einem Neustart des Brennstoffzellensystems nicht von maßgeblicher Bedeutung sind. Die übrigen Nebenaggregate werden mit soviel Brennstoff beliefert, daß die erforderliche Betriebstemperatur aufrecht erhalten wird. Unter Umständen kann ein solcher Stand-By-Betrieb sogar energetisch sinnvoller sein als ein komplettes Abschalten des Brennstoffzellensystems. Insbesondere nimmt aber die Materialbelastung im Kurzstreckeneinsatz ab und damit die Lebensdauer der einzelnen Komponenten zu.

Vorteilhaft umfassen die Nebenaggregate eine Anordnung zum Erzeugen und/oder Aufbereiten eines Brennstoffs für die Brennstoffzelle. Insbesondere, wenn diese Anordnung regelmäßig zuletzt abgeschaltet beziehungsweise zuerst eingeschaltet wird, kann soviel Brennstoff, beispielsweise Wasserstoff, erzeugt werden, um die übrigen zum Neustart erforderlichen Nebenaggregate auf Temperatur zu halten.

Gemäß dem zweiten Aspekt der vorliegenden Erfindung wird ein Verfahren zum Ein-/Abschalten eines Brennstoffzellensystems, mit einer Brennstoffzelle und einer Anzahl von Nebenaggregaten zum Starten und Betreiben der Brennstoffzelle, insbesondere eines wie vorstehend beschriebenen erfindungsgemäßen Brennstoffzellensystems, bereitgestellt, das dadurch gekennzeichnet ist, daß die Brennstoffzelle und/oder zumindest einzelne Nebenaggregate über eine Einrichtung zum Ein-/ Abschalten unabhängig voneinander eingeschaltet beziehungsweise abgeschaltet werden. Dadurch wird die Dynamik des Betriebszyklusses des Brennstoffzellensystems erhöht. Zu den Vorteilen, Wirkungen, Effekten und der Funktionsweise des erfindungsgemäßen Verfahrens wird auf die vorstehenden Ausführungen zum erfindungsgemäßen Brennstoffzellensystem vollinhaltlich Bezug genommen und hiermit verwiesen.

Bevorzugte Ausführungsformen des Verfahrens ergeben sich aus den Unteransprüchen.

Vorteilhaft können die Brennstoffzelle und/oder die zumindest einzelnen Nebenaggregate gestuft ein- beziehungsweise abgeschaltet werden.

In weiterer Ausgestaltung kann die Einrichtung zum Ein-/ Abschalten über eine automatische Schalteinrichtung gesteuert werden.

Insbesondere können die Brennstoffzelle und solche Nebenaggregate, die zur Erzeugung und/oder Aufbereitung des Brennstoffs vorgesehen sind, zuerst eingeschaltet beziehungsweise zuletzt abgeschaltet werden.

Besonders vorteilhaft können das erfindungsgemäße Brennstoffzellensystem und/oder das erfindungsgemäße Verfahren für eine elektrische Maschine, insbesondere einen elektrischen Antrieb für ein Fahrzeug verwendet werden. Auch wenn die Automobilindustrie zur Zeit besonders gute Einsatzmöglichkeiten für Brennstoffzellen bietet, sind dennoch auch andere Einsatzmöglichkeiten denkbar. Zu nennen sind hier unter anderem Brennstoffzellen für mobile Geräte wie Computer oder mobile Telefone bis hin zu Kraftwerksanlagen. Auch eignet sich die Brennstoffzellentechnik für die dezentrale Energieversorgung von Häusern, Industrieanlagen oder dergleichen. Die vorliegende Erfindung ist nicht auf besondere Brennstaffzellentypen beschränkt, so daß die Erfindung in Verbindung mit beliebigen Brennstoffzellentypen verwendet werden kann.

## Patentansprüche

1. Brennstoffzellensystem, mit einer Brennstoffzelle und einer Anzahl von Nebenaggregaten zum Starten und Betreiben der Brennstoffzelle,
**dadurch gekennzeichnet,**
**daß** eine Einrichtung zum Ein-/Abschalten der Brennstoffzelle und der Nebenaggregate vorgesehen ist, über die zumindest einzelne Nebenaggregate nach Abschalten der Brennstoffzelle noch für einige Zeit weiter betreibbar und erst danach abschaltbar sind.

2. Brennstoffzellensystem nach Anspruch 1,
**dadurch gekennzeichnet,**
**daß** die Einrichtung zum Ein-/Abschalten derart ausgebildet ist, daß die Brennstoffzelle und/oder die Nebenaggregate gestuft ein-/abschaltbar sind.

3. Brenrrstoffzellensystem nach Anspruch 1 oder 2,
**dadurch gekennzeichnet,**
**daß** die Einrichtung zum Ein-/Abschalten eine automatische Schalteinrichtung aufweist.

4. Brennstoffzellensystem nach einem der Ansprüche 1 bis 3,
**dadurch gekennzeichnet,**
**daß** die Nebenaggregate eine Anordnung zum Erzeugen und/oder Aufbereiten eines Brennstoffs umfassen.

5. Verfahren zum Ein-/Abschalten eines Brennsioffzellensystems, mit einer Brennstoffzelle und einer Anzahl von Nebenaggregaten zum Starten und Betreiben der Brennstoffzelle, insbesondere eines Brennstoffzellensystems nach einem der Ansprüche 1 bis 4,
**dadurch gekennzeichnet,**
**daß** zumindest einzelne Nebenaggregate über eine Einrichtung zum Ein-/Abschalten nach Abschalten der Brennstoffzelle noch für einige Zeit weiter betrieben und erst danach abgeschaltet werden.

6. Verfahren nach Anspruch 5,
**dadurch gekennzeichnet,**
**daß** die Brennstoffzelle und/oder zumindest einzelne Nebenaggregate gestuft einbeziehungsweise abgeschaltet werden.

7. Verfahren nach Anspruch 5 oder 6,
**dadurch gekennzeichnet,**
**daß** die Einrichtung zum Ein-/Abschalten über eine automatische Schalteinrichtung gesteuert wird.

8. Verfahren nach einem der Ansprüche 5 bis 7,
**dadurch gekennzeichnet,**
**daß** die Brennstoffzelle und solche Nebenaggregate, die zur Erzeugung und/oder Aufbereitung des Brennstoffs vorgesehen sind, zuerst eingeschaltet beziehungsweise zuletzt abgeschaltet werden.

9. Verwendung eines Brennstoffzellensystems nach einem der Ansprüche 1 bis 4 und/oder eines Verfahrens nach einem der Ansprüche 5 bis 8 für eine elektrische Maschine, insbesondere einen elektrischen Antrieb für ein Fahrzeug.

## Claims

1. Fuel cell system with a fuel cell and a number of subsidiary assemblies for starting and operating the fuel cell, **characterised in that** a device is provided for switching the fuel cell and the subsidiary assemblies on and off, by means of which at least individual subsidiary assemblies can continue to be operated for some time after the fuel cell has been switched off and are only subsequently switched off.

2. Fuel cell system according to claim 1, **characterised in that** the device for switching on and off is constructed so that the fuel cell and/or the subsidiary assemblies can be switched on or off in graduated manner.

3. Fuel cell system according to claim 1 or 2, **characterised in that** the device for switching on and off has an automatic switching device.

4. Fuel cell system according to one of claims 1 to 3, **characterised in that** the subsidiary assemblies comprise an arrangement for producing and/or supplying a fuel.

5. Method of switching a fuel cell system on and off, the system having a fuel cell and a number of subsidiary assemblies for starting and operating the fuel cell, particularly a fuel cell system according to one of claims 1 to 4, **characterised in that** at least individual subsidiary assemblies can continue to be run for some time by means of a device for switching on and off, after the fuel cell has been switched off, and only later are they switched off.

6. Process according to claim 5, **characterised in that** the fuel cell and/or at least individual subsidiary assemblies can be switched on and off in graduated manner.

7. Process according to claim 5 or 6, **characterised in that** the device for switching on and off is controlled by an automatic switching device.

8. Process according to one of claims 5 to 7, **characterised in that** the fuel cell and those subsidiary assemblies which are provided for producing and/or supplying the fuel are switched on first and switched off last.

9. Use of a fuel cell system according to one of claims 1 to 4 and/or a process according to one of claims 5 to 8 for an electrical machine, particularly an electrical drive for a lift.

## Revendications

1. Système de pile à combustible, comprenant une pile à combustible et un certain nombre d'appareils auxiliaires pour démarrer et faire fonctionner la pile,
**caractérisé en ce qu'**
il est prévu un dispositif pour la mise en marche ou l'arrêt de la pile à combustible et les appareils auxiliaires, par lequel au moins quelques appareils auxiliaires, après arrêt de la pile à combustible peuvent continuer à être entraîner pendant un certain temps pour être seulement arrêtés ensuite.

2. Système de pile à combustible selon la revendication 1,
**caractérisé en ce que**
le dispositif de mise en marche ou à l'arrêt est constitué de manière que la pile à combustible et/ou les appareils auxiliaires soient mis en marche ou par étapes.

3. Système de pile à combustible selon l'une quelconque des revendications 1 ou 2,
**caractérisé en ce que**
le dispositif de mise en marche ou à l'arrêt est un dispositif automatique de commutation.

4. Système de pile à combustible selon l'une quelconque des revendications 1 à 3,
**caractérisé en ce que**
les appareils auxiliaires comprennent un système pour produire et/ou préparer un combustible.

5. Procédé pour mettre en marche ou/arrêter un système de pile à combustible et un certain nombre d'appareils auxiliaires pour démarrer et faire fonctionner la pile, en particulier un système selon l'une quelconque des revendications 1 à 4,
**caractérisé en ce qu'**
au moins quelques appareils auxiliaires, par le dispositif de mise en marche à l'arrêt, continuent après l'arrêt de la pile à combustible, à être entraînés pendant un certain temps pour être seulement arrêtés ensuite.

6. Procédé selon la revendication 5,
**caractérisé en ce que**
la cellule à combustible et/ou au moins quelques appareils auxiliaires sont mis en marche ou/arrêtés par étapes.

7. Procédé selon l'une quelconque des revendications 5 ou 6,
**caractérisé en ce que**
le dispositif de marche/arrêt est commandé par un dispositif de commutation automatique.

8. Procédé selon l'une quelconque des revendications 5 à 7,
**caractérisé en ce que**
la cellule à combustible et les appareils auxiliaires prévus pour produire et/ou préparer le carburant sont les premiers à être mis en route et les derniers à être arrêtés.

9. Utilisation du système de pile à combustible selon l'une quelconque des revendications 1 à 4 et/ou du procédé selon l'une quelconque des revendications 5 à 8 pour un moteur électrique, notamment pour entraîner électriquement un véhicule automobile.
